# EUROPÄISCHE PATENTSCHRIFT

(11) **EP 3 106 225 B1**
(45) Veröffentlichungstag und Bekanntmachung des Hinweises auf die Patenterteilung: **03.06.2020**
(21) Anmeldenummer: 16174612.8
(22) Anmeldetag: 15.06.2016
(51) Int. Cl.: B01L 1/02, B01L 9/06, G01N 17/00

(54) **VORRICHTUNG UND VERFAHREN ZUR THERMISCHEN LAGERUNG VON PROBEN**
DEVICE AND METHOD FOR THE THERMAL STORAGE OF SAMPLES
DISPOSITIF ET PROCÉDÉ DESTINÉS AU STOCKAGE THERMIQUE D'ÉCHANTILLONS

(30) Priorität: 15.06.2015 DE 102015210957
(43) Veröffentlichungstag der Anmeldung: 21.12.2016
(73) Patentinhaber: Deutsches Zentrum für Luft- und Raumfahrt e.V., 51147 Köln (DE)
(72) Erfinder: Jung, Christian, 53844 Troisdorf (DE); Senholdt, Marion, 53127 Bonn (DE)
(74) Vertreter: dompatent von Kreisler Selting Werner - Partnerschaft von Patent- und Rechtsanwälten mbB

(56) Entgegenhaltungen:
- DE-A1-102013 220 416
- DE-U1- 29 613 557
- US-A- 3 736 501
- US-A1- 2004 115 101
- US-A1- 2004 213 651
- US-A1- 2013 019 695
- US-B1- 6 475 776

## Beschreibung

Die vorliegende Erfindung betrifft eine Vorrichtung sowie ein Verfahren zur thermischen Lagerung von Proben.

Materialien, die über einen längeren Zeitraum einer hohen Temperatur ausgesetzt sind, werden hinsichtlich ihrer thermischen Stabilität geprüft, um ihre Zersetzung oder die gebildeten Alterungsprodukte zu analysieren. Materialien, die bezüglich ihrer thermischen Stabilität überprüft werden müssen sind Wärmeträgermedien, die beispielsweise in Solarkraftwerken zum Einsatz kommen. Die zu prüfenden Materialien sind somit beispielsweise flüssig oder fließfähig.

Aus US 6,475,776 B1 ist ein Inkubator mit einem Aufbewahrungsraum sowie einem in dem Aufbewahrungsraum befindlichen Probengestell bekannt, wobei in dem Aufbewahrungsraum definierte Umgebungsbedingungen hergestellt und beibehalten werden können und wobei das Probengestell über eine Bewegungsvorrichtung verfügt.

US 2013/0019695 A1 beschreibt ein Probenabteil für ein Flüssigkeitschromatographiesystem, wobei innerhalb des Probenabteils eine definierte Lufttemperatur eingestellt und beibehalten werden kann. In dem Probenabteil befindet sich eine Probenschale mit einem Antrieb, mittels derer die Probenschale in Bewegung gesetzt werden kann.

Aus US 2004/0115101 A1 ist ein Klimaschrank mit einer Klimakammer bekannt, wobei in der Klimakammer mehrere Lagerschächte mit übereinander angeordneten Lagerplätzen angeordnet sind.

DE 10 2013 220 416 A1 beschreibt eine Zentrifuge, wobei in der Zentrifugationseinheit eine definierte Temperatur eingestellt werden kann.

Für die Prüfung der thermischen Stabilität von Material, insbesondere von Wärmeträgermedien, wird ein Prüfverfahren nach DIN 51528 angewendet. Hierfür ist es notwendig, dass die Proben in einem Wärmeschrank für 480 Stunden bei einer vorgegebenen Prüftemperatur gelagert werden. Die Prüftemperatur darf maximal eine Abweichung von +/- 1K haben.

Grundsätzlich existieren sogenannte Laboröfen, die zeitlich sehr konstante thermische Bedingungen schaffen können und eine Temperaturstabilität von +/- 0,5K besitzen. Problematisch ist jedoch, dass in dem Ofenraum dieser Öfen eine thermische Inhomogenität von bis zu +/- 5K vorliegt. Wenn nun mehrere Proben, die für eine Testreihe verwendet werden sollen, in einem derartigen Ofen gelagert werden, so kann es dazu kommen, dass diese Proben unterschiedliche Temperaturen bei der Lagerung aufweisen, so dass diese für eine vergleichende Versuchsreihe nicht geeignet sind. Zumeist sind nur zwei oder drei Proben innerhalb des Ofenraumes von identischer bzw. nahezu identischer Temperatur, so dass diese für eine Auswertung gemäß DIN 51528 geeignet sind. Die Ergebnisse der Alterungsuntersuchungen bei Nutzung verschiedener Öfen bzw. die Ergebnisse verschiedener Laboratorien lassen sich darüber hinaus kaum vergleichen.

Es ist daher die Aufgabe der vorliegenden Erfindung, eine Vorrichtung zur thermischen Lagerung von Proben sowie ein entsprechendes Verfahren zu schaffen, bei dem eine Vielzahl von Proben mit einer vorgegebenen Prüftemperatur gelagert werden kann.

Die erfindungsgemäße Vorrichtung ist definiert durch die Merkmale des Anspruchs 1.

Das erfindungsgemäße Verfahren ist definiert durch die Merkmale des Anspruchs 13.

Die erfindungsgemäße Vorrichtung zur thermischen Lagerung von Proben weist einen Wärmeraum und eine Probenhalterung zur Halterung von Probengefäßen, in denen die Proben aufnehmbar sind, auf. Die Erfindung ist dadurch gekennzeichnet, dass die Probenhalterung als Drehhalterung mit einer Rotationsachse ausgebildet ist, wobei die Probenhalterung die Probengefäße während der Lagerung innerhalb des Wärmeraums auf einer definierten Kreisbahn oder auf mehreren definierten Kreisbahnen um die Rotationsachse bewegt.

Durch die Lagerung der Probengefäße auf einer Probenhalterung, die als Drehhalterung ausgebildet ist, wobei die Probengefäße auf einer definierten Kreisbahn oder auf mehreren definierten Kreisbahnen um die Rotationsachse bewegt werden, ist es möglich, die räumlich inhomogene Temperaturverteilung in dem Wärmeraum auszugleichen und eine reproduzierbare mittlere Probentemperatur auch über einen längeren Zeitraum, wie beispielsweise 500-4000 Stunden, einzuhalten. Alle Proben der Probenhalterung insbesondere auf der gleichen Kreisbahn erhalten die gleichen thermischen Bedingungen, so dass eine Vielzahl von Proben zur gleichen Zeit der thermischen Lagerung ausgesetzt werden kann und für eine spätere Prüfung zur Verfügung steht. Der Wärmeraum besitzt eine hohe zeitliche Temperaturstabilität von +/- 1K, vorzugsweise +/-0,5K. Unter Temperaturstabilität wird verstanden, dass an einem Ort in dem Wärmeraum, in dem beispielsweise ein für die Steuerung des Wärmeraums notwendiger Temperatursensor angeordnet ist, über den gesamten Lagerungszeitraum von beispielsweise 500 - 4000 Stunden nach dem ersten Erreichen der Zieltemperatur diese Temperatur innerhalb eines Bereichs von +/-1K bzw. +/- 0,5K bezogen auf den Mittelwert der Temperatur eingehalten wird.

Die Vorrichtung ist besonders geeignet zur thermischen Lagerung von Proben, die flüssig oder fließfähig sind. Insbesondere ist die Vorrichtung geeignet für Proben von Wärmeträgermedien. Probengefäße, die mit der erfindungsgemäßen Vorrichtung verwendet werden können, sind beispielsweise Glasampullen oder metallische Prüfgefäße. Die Prüfgefäße können beispielsweise auch ein Schutzrohr aufweisen.

Unter thermischer Lagerung wird im Rahmen der Erfindung eine Lagerung bei einer Temperatur zwischen 200°C und 800°C, vorzugsweise zwischen 300°C und 600°C verstanden.

In einer bevorzugten Ausführungsform der Erfindung ist vorgesehen, dass die Probenhalterung zur Halterung von langgestreckten Probengefäßen ausgebildet ist, wobei die Probengefäße mittels der Probenhalterung parallel zu der Rotationsachse halterbar sind. Auf diese Weise können sehr viele Proben auf der gleichen Kreisbahn durch den Wärmeraum geführt werden. Ferner ermöglicht eine derartige Anordnung, dass die in den Probengefäßen aufgenommenen Proben exakt auf der Kreisbahn geführt werden können.

Die Rotationsachse kann horizontal oder vertikal verlaufen.

Vorzugsweise ist vorgesehen, dass die Probenhalterung über eine außerhalb des Wärmeraums angeordnete Antriebsvorrichtung antreibbar ist. Der Wärmeraum ist beispielsweise durch eine Wandung umgeben, wobei die Antriebsvorrichtung auf der von dem Wärmeraum abgewandten Seite der Wandung angeordnet sein kann. Auch ist es möglich, dass die Antriebsvorrichtung in einem Hohlraum in der Wandung angeordnet ist. Durch die Anordnung der Antriebsvorrichtung außerhalb des Wärmeraums wird die thermische Belastung der Antriebsvorrichtung möglichst gering gehalten. Die Anordnung der Antriebsvorrichtung auf der von dem Wärmeraum abgewandten Seite der Wandung des Wärmeraums hat den Vorteil, dass die Antriebsvorrichtung auf besonders einfache Art und Weise von außen zugänglich ist. Dadurch kann die Antriebsvorrichtung mit einfachen Mitteln angeschlossen werden. Ferner ermöglicht eine derartige Anordnung auch die Kontrolle der Antriebsvorrichtung während des Betriebs der erfindungsgemäßen Vorrichtung.

Dabei ist vorzugsweise vorgesehen, dass die Probenhalterung über eine durch eine Öffnung in einer Wandung des Wärmeraums geführte Antriebswelle antreibbar ist. Dadurch kann auf konstruktiv einfache Art und Weise die Probenhalterung mit einer außerhalb des Wärmeraums angeordneten Antriebsvorrichtung verbunden werden, um das Drehmoment der Antriebsvorrichtung auf die Probenhalterung zu übertragen.

Herkömmliche Öfen, wie beispielsweise Laboröfen, haben häufig bereits eine Öffnung in einer Wandung, die als Kaminöffnung verwendet wird. Bei der erfindungsgemäßen Vorrichtung kann somit in vorteilhafter Weise ein derartiger Ofen als Wärmeraum verwendet werden, wobei die bereits vorhandene Öffnung zur Durchführung der Antriebswelle verwendet wird.

Die Antriebswelle kann über eine in der Wandung oder auf der von dem Wärmeraum abgewandten Seite der Wandung angeordnete Lagervorrichtung gelagert sein. Auf diese Weise wird sichergestellt, dass die bewegte Teile aufweisende Lagervorrichtung ebenfalls außerhalb des Wärmeraums angeordnet Deutsches Zentrum für Luft- und Raumfahrt e.V. ist und keiner hohen thermischen Belastung ausgesetzt ist. Dadurch kann die Lagervorrichtung kostengünstig bereitgestellt werden. Insbesondere kann vorgesehen sein, dass die Probenhalterung und die Antriebswelle ausschließlich über diese Lagervorrichtung gelagert sind, so dass die Probenhalterung nur über die Antriebswelle in dem Wärmeraum gelagert ist und somit quasi in dem Wärmeraum frei schwebt. Dadurch wird der vorrichtungstechnische Aufwand bei der erfindungsgemäßen Vorrichtung gering gehalten.

Gemäß der Erfindung ist mindestens ein Temperatursensor an der Probenhalterung oder an einem der Probengefäße angeordnet. Bei der Anordnung der Proben auf mehreren Kreisbahnen (beispielsweise mit unterschiedlichen Radien) um die Rotationsachse wird vorzugsweise ein Temperatursensor pro Kreisbahn eingesetzt. Dadurch kann die Temperatur in unmittelbarer Nähe der Probengefäße oder an einem Probengefäß selbst aufgenommen werden. Dadurch kann in vorteilhafter Weise geprüft werden, ob die Proben, die in der erfindungsgemäßen Vorrichtung thermisch gelagert werden, der (gemäß der Norm) vorgegebenen Prüftemperatur ausgesetzt waren. Aufgrund der hohen Temperaturen in dem Wärmeraum, ist das Vorsehen von Sensoren mit aufwendigen elektronischen Komponenten nicht möglich, da diese durch die hohen Temperaturen zerstört werden könnten. Als Temperatursensoren kommen beispielsweise Widerstandssensoren oder Thermoelemente in Betracht.

Gemäss der Erfindung ist vorgesehen, dass der mindestens eine Temperatursensor über eine entlang der Antriebswelle geführte Datenleitung mit einer außerhalb des Wärmeraums angeordneten Datenaufzeichnungsvorrichtung oder Datenaufnahmevorrichtung verbunden ist. Unter Datenaufzeichnungsvorrichtung oder Datenaufnahmevorrichtung wird im Rahmen dieser Erfindung eine Vorrichtung verstanden, die zur Erfassung, Verarbeitung und Speicherung der von den Temperatursensoren erzeugten Messgrößen geeignet ist. Auf diese Weise wird sichergestellt, dass die Datenaufnahmevorrichtung nicht einer hohen thermischen Belastung ausgesetzt ist. Die Datenaufzeichnungsvorrichtung kann beispielsweise auf der Antriebswelle angeordnet sein und von dieser mitgeführt werden. Dadurch wird eine Verkabelung mittels der Datenleitung vereinfacht, da sowohl Temperatursensor als auch Datenaufzeichnungsvorrichtung im Betrieb gedreht werden. Die Datenaufzeichnungsvorrichtung kann beispielsweise einen Energiespeicher zur Energieversorgung aufweisen. Die Datenaufnahmevorrichtung kann die Temperaturdaten während einer thermischen Lagerung der Proben aufnehmen und für eine spätere Auswertung zur Verfügung stellen. Auch ist es möglich, dass eine Datenaufnahmevorrichtung drahtlos mit dem mindestens einen Temperatursensor verbunden ist. Auch kann eine drahtlose Verbindung mit einer externen Auswerteeinrichtung vorgesehen sein, so dass Daten während des Betriebs zur Auswertung übermittelt werden können. Bei der Variante einer drahtlosen Verbindung zwischen Temperatursensor und Datenaufzeichnungsvorrichtung kann vorgesehen sein, dass außerhalb des Wärmeraums an der Antriebswelle ein Signalwandler sowie ein Sender angeordnet ist. Der Signalwandler ist mit der entlang der Antriebswelle geführten Datenleitung verbunden. Die Datenleitung kann grundsätzlich beispielsweise ein Draht sein. Der Signalwandler wandelt die von dem Temperatursensor erzeugten Signale, die zumindest in Form von Spannungen vorliegen, in Signale, die über den Sender drahtlos übermittelt werden können. Bei einem aktiven Temperatursensor kann an der Antriebswelle außerhalb des Wärmeraums eine Energieversorgung angeordnet sein, die über eine an der Antriebswelle entlang geführten Energieleitung mit dem Temperatursensor verbunden ist und diesen versorgt.

Gemäss der Erfindung ist vorgesehen, dass die Antriebswelle als Hohlwelle ausgebildet ist. Dabei kann beispielsweise vorgesehen sein, dass die Datenleitung in oder an der Hohlwelle geführt ist. Auf diese Weise ist die Datenleitung auf besonders einfache Art und Weise an der Antriebswelle führbar.

Es kann beispielsweise auch vorgesehen sein, dass die Hohlwelle eine Gasleitung bildet, die zur Einleitung eines Inertgases in den Wärmeraum geeignet ist. Dadurch kann Inertgas in den Wärmeraum eingeführt werden, wodurch eine Zündungsunterdrückung, beispielsweise bei einer Beschädigung eines der Probengefäße, erreicht werden kann. Dadurch können Beschädigungen an den weiteren Probengefäßen oder auch an der erfindungsgemäßen Vorrichtung vermieden werden.

Der Wärmeraum kann ein Heizelement mit einer Umluftvorrichtung aufweisen. Die Umluftvorrichtung bewirkt eine besonders gleichmäßige Temperaturverteilung in dem Wärmeraum.

Zusätzlich oder alternativ zu der Umluftvorrichtung kann die Probenhalterung Schaufelflächen aufweisen, die zur Umwälzung von Luft dienen. Während der Drehung der Probenhalterung wälzen die Schaufelflächen somit Luft in dem Wärmeraum um, wodurch die Temperaturverteilung deutlich verbessert ist. Da die Probenhalterung in einem mittleren Bereich des Wärmeraums angeordnet ist, ist eine derartige Umwälzung effektiver als eine herkömmliche Umluftvorrichtung, die an einer Wandung des Wärmeraums angeordnet ist.

Das erfindungsgemäße Verfahren zur thermischen Lagerung von Proben weist die folgenden Schritte auf:
- Einbringen der Proben in Probengefäße
- Anordnen der Probengefäße in einem Wärmeraum
- Erwärmen des Wärmeraums auf eine vorgegebene Prüftemperatur
- Bewegen der Probengefäße auf einer definierten Kreisbahn um eine Rotationsachse für einen vorgegebenen Zeitraum, wobei in dem Zeitraum der Wärmeraum mit der vorgegebenen Prüftemperatur betrieben wird.

Das erfindungsgemäße Verfahren ist insbesondere für flüssige oder fließfähige Materialien als Proben geeignet. Insbesondere ist das Verfahren zur thermischen Lagerung von Wärmeträgermaterial für Solarkraftwerke geeignet.

Im Rahmen der Erfindung bedeuten das Erwärmen des Wärmeraums auf eine vorgegebene Prüftemperatur und Betrieb des Wärmeraums mit der vorgegebenen Prüftemperatur, dass innerhalb des Wärmeraums die Prüftemperatur mit der Genauigkeit der Temperaturstabilität des Wärmeraums gehalten wird. Während des erfindungsgemäßen Verfahrens zur thermischen Lagerung weicht somit die Prüftemperatur beispielsweise +/- 1K von dem vorgegebenen Wert ab. Auch ist die Temperatur des Wärmeraums nicht notwendigerweise gleich verteilt. Innerhalb des Wärmeraums können auch die üblicherweise in einem Wärmeraum auftretenden örtlichen Temperaturunterschiede, die bis zu +/- 5K betragen können, vorhanden sein.

Mittels des erfindungsgemäßen Verfahrens wird erreicht, dass die Probengefäße, die auf einer definierten Kreisbahn geführt sind, alle weitestgehend den gleichen thermischen Belastungen ausgesetzt werden. Durch die Bewegung der Proben auf einer Kreisbahn werden die Einflüsse der Temperaturstabilität des Wärmeraums und der ungenauen Temperaturverteilung in dem Wärmeraum verringert. Mittels des erfindungsgemäßen Verfahrens können mehrere Proben gleichzeitig einer Temperaturbelastung ausgesetzt werden, die im Rahmen einer Thermostabilitätsprüfung der Probe vorgesehen ist. Für eine Analyse im Rahmen der Prüfung steht somit eine Vielzahl von thermisch gleich belasteten Proben zur Verfügung.

Das erfindungsgemäße Verfahren sieht vorzugsweise vor, dass die Rotationsachse horizontal oder vertikal verläuft.

Vorzugsweise ist vorgesehen, dass während der Bewegung der Probengefäße an mindestens einem Probengefäß oder an einer die Probengefäße aufnehmenden Probenhalterung die Temperatur erfasst wird. Dadurch kann während der thermischen Lagerung sehr exakt die Temperatur bestimmt werden, die die Probengefäße und somit die in den Probengefäßen aufgenommenen Proben ausgesetzt sind. Die Temperaturerfassung kann beispielsweise mittels an einer Probenhalterung oder an den Probengefäßen mitgeführten Sensoren erfolgen.

Vorzugsweise ist vorgesehen, dass die Temperatur in regelmäßigen Zeitabständen während des Zeitraums erfasst und aufgezeichnet wird. Dadurch ist während der thermischen Lagerung der Proben eine regelmäßige Temperaturdatenaufnahme möglich, die bei einer späteren Auswertung berücksichtigt werden kann. Insbesondere besteht die Möglichkeit zu prüfen, ob bei der thermischen Lagerung der Proben die von der DIN 51528 vorgeschriebenen Genauigkeiten der Prüftemperatur eingehalten worden sind.

Die Probengefäße können mit einer Drehzahl zwischen 0,1 und 2000, vorzugsweise zwischen 1 und 60, besonders bevorzugt zwischen 10 und 20, Umdrehungen pro Minute auf der Kreisbahn bewegt werden.

Vorzugsweise ist bei dem erfindungsgemäßen Verfahren vorgesehen, dass die Probengefäße eine Längsachse aufweisen und parallel zu der Rotationsachse angeordnet sind. Dadurch lassen sich sehr viele Proben gleichzeitig in dem Wärmeraum anordnen und gleichzeitig mittels des erfindungsgemäßen Verfahrens thermisch lagern.

Das erfindungsgemäße Verfahren kann insbesondere mittels der erfindungsgemäßen Vorrichtung durchgeführt werden.

Im Folgenden wird unter Bezugnahme auf die nachfolgenden Figuren die Erfindung näher erläutert.

Es zeigen:
- Figur 1: eine schematische Seitenansicht einer erfindungsgemäßen Vorrichtung mit einem im Schnitt dargestellten Wärmeraum und
- Figur 2: eine schematische Draufsicht auf die Probenhalterung der erfindungsgemäßen Vorrichtung.

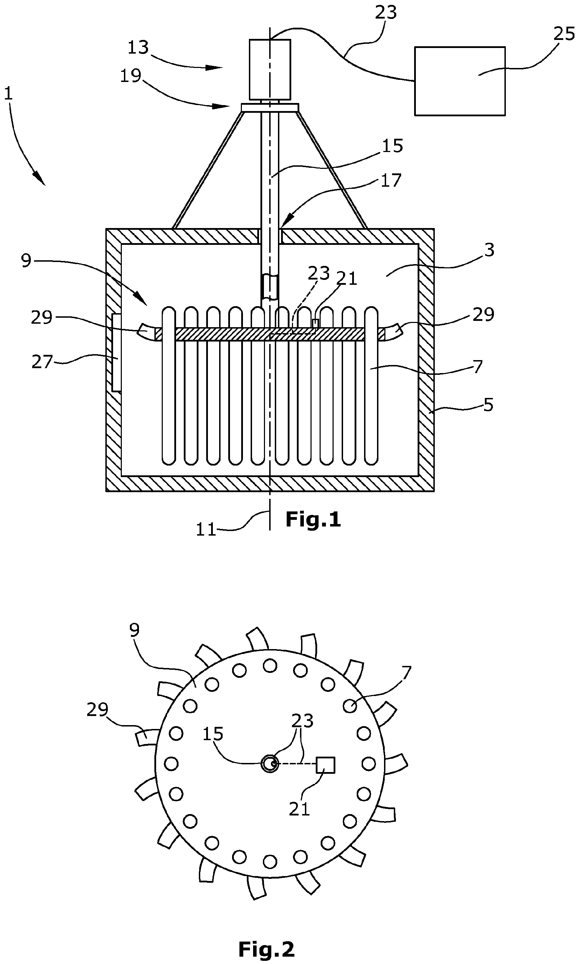

In Figur 1 ist eine erfindungsgemäße Vorrichtung 1 zur thermischen Lagerung von Proben schematisch dargestellt. Die Vorrichtung 1 weist einen Wärmeraum 3 auf, der von einer Wandung 5 umgeben ist. Die Wandung 5 ist in der Figur 1 im Schnitt dargestellt.

Um die Proben in der erfindungsgemäßen Vorrichtung thermisch lagern zu können, werden diese in Probengefäße 7 eingebracht. Die Probengefäße 7 werden während der Lagerung mittels einer Probenhalterung 9 gehaltert. Die Probenhalterung 9 ist als Drehhalterung ausgebildet, so dass die Proben karussellartig gehalten sind und mittels der Probenhalterung 9 während der Lagerung auf einer definierten Kreisbahn um eine Rotationsachse 11 bewegt werden. Die Proben können auch auf mehreren Kreisbahnen untergebracht werden, um die Anzahl der Proben zu erhöhen.

Die Probenhalterung 9 wird mittels einer Antriebsvorrichtung 13 drehend angetrieben. Die Antriebsvorrichtung 13 ist dabei über eine als Hohlwelle ausgebildete Antriebswelle 15 mit der Probenhalterung 9 verbunden. Die Antriebswelle 15 ist durch eine Öffnung 17 in der Wandung 5 des Wärmeraums 3 geführt, so dass die Antriebsvorrichtung 13 auf der von dem Wärmeraum 3 abgewandten Seite der Wandung 5 angeordnet sein kann und somit während des Betriebs den in dem Wärmeraum 3 herrschenden Temperaturen nicht ausgesetzt ist.

Die Antriebswelle 15 ist mittels einer Lagervorrichtung 19 gelagert. Die Lagervorrichtung 19 ist ebenfalls auf der von dem Wärmeraum 3 abgewandten Seite der Wandung 5 angeordnet.

Die Lagerung der Antriebswelle 15 und somit der Probenhalterung 9 erfolgt ausschließlich über die Lagervorrichtung 19, so dass die Probenhalterung 9 quasi schwebend in dem Wärmeraum 3 gehalten ist.

Wie am besten aus Figur 2 hervorgeht, ist die Probenhalterung 9 als Kreisscheibe ausgebildet, in der die Probengefäße 7 in entsprechenden Öffnungen in regelmäßigen Abständen zueinander und zu der Rotationsachse 11 eingesteckt sind. Dadurch können die Probengefäße 7 auf einer definierten Kreisbahn innerhalb des Wärmeraums 5 bewegt werden.

An der Probenhalterung 9 ist ein Temperatursensor 21 angeordnet, der während der Drehbewegung der Probenhalterung mitgeführt wird. Somit kann in unmittelbarer Nähe zu den Probengefäßen 7 die Temperatur erfasst werden. Der Temperatursensor 21 ist über eine Datenleitung 23, die in den Figuren teilweise nur schematisch dargestellt ist, mit einer Datenaufnahmevorrichtung 25 verbunden, die die Temperaturdaten aufnimmt. Die Datenleitung 23 ist entlang der Antriebswelle 15 geführt. Da in dem dargestellten Ausführungsbeispiel die Antriebswelle 15 als Hohlwelle ausgeführt ist, kann die Datenleitung 23 in der Hohlwelle geführt sein, wie in der Figur 2 dargestellt ist.

Die als Antriebswelle 15 ausgebildete Hohlwelle bildet ferner eine Gasleitung, über die ein Inertgas in den Wärmeraum 3 einleitbar ist. Dadurch kann im Falle einer Beschädigung eines Probengefäßes 7 eine Zündentwicklung unterbunden werden.

Der Wärmeraum 3 weist ferner ein Heizelement 27 mit Umluftvorrichtung auf, über das der Wärmeraum in vorteilhafter Weise und relativ gleichmäßig erwärmt werden kann.

Ferner sind an der Probenhalterung 9 Schaufelflächen 29 vorgesehen, die ein Umwälzen der Luft während der Drehbewegung der Probenhalterung 9 bewirken.

Für die thermische Lagerung der Proben werden diese in die Probengefäße 7 eingesetzt und in der Probenhalterung 9 angeordnet. Der Wärmeraum 3 wird auf eine vorgegebene Prüftemperatur erwärmt. Mittels der Antriebsvorrichtung 13 kann die Probenhalterung 9 über einen vorgegebenen Zeitraum um die Rotationsachse 11 gedreht werden, so dass die Probengefäße 7 auf einer definierten Kreisbahn geführt werden. Dadurch werden die Probengefäße 7 und die darin enthaltenen Proben während des vorgegebenen Zeitraums mit der gleichen thermischen Belastung ausgesetzt und etwaige Temperaturgenauigkeiten innerhalb des Wärmeraums 5 werden nahezu vollständig eliminiert. Dadurch kann eine Vielzahl von Proben gleichzeitig in der erfindungsgemäßen Vorrichtung 1 thermisch gelagert werden, wobei alle in der Vorrichtung 1 gleichzeitig gelagerten Proben der gleichen Temperaturbelastung ausgesetzt werden. Dadurch kann eine Vielzahl von Proben in vergleichbarer Weise bezüglich ihrer Thermostabilität ausgewertet werden.

Mittels der erfindungsgemäßen Vorrichtung 1 können somit sehr gut reproduzierbare Daten geschaffen werden.

## Patentansprüche

1. Vorrichtung (1) zur thermischen Lagerung von Proben mit einem Wärmeraum (3) und mit einer Probenhalterung (9) zur Halterung von Probengefäßen (7), in denen die Proben aufnehmbar sind,
wobei die Probenhalterung (9) als Drehhalterung mit einer Rotationsachse (11) ausgebildet ist, wobei die Probenhalterung (9) die Probengefäße (7) während der Lagerung innerhalb des Wärmeraums (3) auf mindestens einer definierten Kreisbahn um die Rotationsachse (11) bewegt, **dadurch gekennzeichnet, dass** mindestens ein Temperatursensor (21) an der Probenhalterung (9) oder an einem der Probengefäße (7) angeordnet ist, wobei der mindestens eine Temperatursensor (21) über eine entlang der Antriebswelle (15) geführte Datenleitung (23) mit einem außerhalb des Wärmeraums angeordneten Datenaufnahmevorrichtung (25) verbunden ist, wobei die Antriebswelle (15) als Hohlwelle ausgebildet ist und wobei die Datenleitung (23) in der Hohlwelle geführt ist.

2. Vorrichtung nach Anspruch 1, **dadurch gekennzeichnet, dass** die Probenhalterung (9) zur Halterung von langgestreckten Probengefäßen (7) ausgebildet ist, wobei die Probengefäße (7) mittels der Probenhalterung (9) parallel zu der Rotationsachse (11) halterbar sind.

3. Vorrichtung nach Anspruch 1 oder 2, **dadurch gekennzeichnet, dass** die Probenhalterung (9) über eine außerhalb des Wärmeraums (3) angeordnete Antriebsvorrichtung (13) antreibbar ist.

4. Vorrichtung nach Anspruch 3, **dadurch gekennzeichnet, dass** die Probenhalterung (9) über eine durch eine Öffnung (17) in einer Wandung (5) des Wärmeraums (3) geführte Antriebswelle (15) antreibbar ist.

5. Vorrichtung nach Anspruch 3 oder 4, **dadurch gekennzeichnet, dass** die Antriebswelle (15) über eine in der Wandung (5) oder auf der von dem Wärmeraum (3) abgewandten Seite der Wandung (5) angeordnete Lagervorrichtung (19) gelagert ist.

6. Vorrichtung nach einem der Ansprüche 1 bis 5, **dadurch gekennzeichnet, dass** die Hohlwelle eine Gasleitung zum Einleiten eines Inertgases in den Wärmeraum (3) bildet.

7. Vorrichtung nach einem der Ansprüche 1 bis 6, **dadurch gekennzeichnet, dass** der Wärmeraum (3) ein Heizelement (27) mit Umluftvorrichtung aufweist.

8. Vorrichtung nach einem der Ansprüche 1 bis 7, **dadurch gekennzeichnet, dass** an der Probenhalterung (9) Schaufelflächen (29) zum Umwälzen von Luft angeordnet sind.

9. Verfahren zur thermischen Lagerung von Proben in Probengefäßen (7) unter Verwendung einer Vorrichtung gemäß einem der Ansprüche 1 bis 8 mit folgenden Schritten:
- Einbringen der Proben in die Probengefäße (7)
- Anordnen der Probengefäße in dem Wärmeraum (3)
- Erwärmen des Wärmeraums (3) auf eine vorgegebene Prüftemperatur
- Bewegen der Probengefäße (7) auf mindestens einer definierten Kreisbahn um die Rotationsachse (11) für einen vorgegebenen Zeitraum, wobei in dem Zeitraum der Wärmeraum (3) mit der vorgegebenen Prüftemperatur betrieben wird, **dadurch gekennzeichnet, dass** während der Bewegung der Probengefäße (7) an mindestens einem Probengefäß (7) oder an der die Probengefäße (7) aufnehmenden Probenhalterung (9) die Temperatur erfasst wird.

10. Verfahren nach Anspruch 9, **dadurch gekennzeichnet, dass** die Rotationsachse (11) horizontal oder vertikal verläuft.

11. Verfahren nach Anspruch 9 oder 10, **dadurch gekennzeichnet, dass** die Temperatur in regelmäßigen Zeitabständen während des Zeitraums erfasst und aufgezeichnet wird.

12. Verfahren nach einem der Ansprüche 9 bis 11, **dadurch gekennzeichnet, dass** die Probengefäße (7) mit einer Drehzahl zwischen 0,1 und 2000, vorzugsweise zwischen 1 und 60, besonders bevorzugt zwischen 10 und 20, Umdrehungen pro Minute auf der Kreisbahn bewegt werden.

13. Verfahren nach einem der Ansprüche 9 bis 12, **dadurch gekennzeichnet, dass** die Probengefäße (7) parallel zu der Rotationsachse (11) angeordnet sind.

## Claims

1. Device for the thermal storage of samples
comprising a warming chamber (3) and comprising a sample mount (9) for mounting sample containers (7) in which the samples may be received,
wherein the sample mount (9) is formed as a rotatable mount having a rotary axis (11), wherein, during storage, the sample mount (9) moves the sample containers (7) in the warming chamber (3) on at least one defined circular trajectory around the rotary axis (11),
**characterized in that**
at least one temperature sensor (21) is arranged on the sample mount (9) or on one of the sample containers (7), wherein the at least one temperature sensor (21) is connected to a data collection device (25) arranged outside the warming chamber via a data line (23) guided along the drive shaft (15), wherein the drive shaft (15) is configured as a hollow shaft, and wherein the data line (20) is guided in the hollow shaft.

2. Device of claim 1, **characterized in that** the sample mount (9) is configured for mounting elongate sample vessels (7), wherein the sample vessels (7) are adapted to be mounted in parallel with the rotary axis (11) by the sample mount (9).

3. Device of claim 1 or 2, **characterized in that** the sample mount (9) is adapted to be driven by a drive device (13) arranged outside the warming chamber (3).

4. Device of claim 3, **characterized in that** the sample mount (9) is adapted to be driven by a drive shaft (15) guided through an opening (17) in a wall (5) of the warming chamber (3).

5. Device of claim 3 or 4, **characterized in that** the drive shaft (15) is supported by a bearing device (19) arranged in in the wall (5) or on the side of the wall (5) averted from the warming chamber (3).

6. Device of one of claims 1 to 5, **characterized in that** the hollow shaft forms a gas line for introducing an inert gas into the warming chamber (3).

7. device of one of claims 1 to 6, **characterized in that** the warming chamber (3) comprises a heating element (27) with an air circulation device.

8. Device of one of claims 1 to 7, **characterized in that** blade surfaces (29) for circulating air are arranged on the sample mount (9).

9. Method for the thermal storage of samples in sample containers (7) with the use of a device of one of claims 1 to 8, comprising the following steps:
- introducing the samples into the sample containers (7),
- arranging the sample containers in the warming chamber (3),
- heating the warming chamber (3) to a predefined test temperature,
- moving the sample containers (7) on at least one defined circular trajectory around the rotary axis (11) for a predetermined time, wherein, during this time, the warming chamber ((3) is operated at the predefined test temperature, **characterized in that**, during the movement of the sample containers (7), the temperature is detected at at least one sample container (7) or at the sample mount ((9) receiving the sample containers (7).

10. Method of claim 9, **characterized in that** the rotary axis (11) extends horizonally or vertically.

11. Method of claim 9 or 10, **characterized in that** the temperature is detected and recorded at regular time intervals during this time.

12. Method of one of claims 9 to 11, **characterized in that** the sample containers (7) are moved on the circular trajectory at a speed between 0.1 and 2000, preferably between 1 and 60, particularly preferred between 10 and 20 revolutions per minute.

13. Method of one of claims 9 to 12, **characterized in that** the sample containers (7) are arranged in parallel with the rotary axis (11).

## Revendications

1. Dispositif (1) de stockage thermique d'échantillons doté d'une chambre de chauffage (3) et d'un porte-échantillons (9) permettant de maintenir des récipients à échantillons (7), à l'intérieur desquels les échantillons peuvent être accueillis, le porte-échantillons (9) est réalisé comme support tournant doté d'un axe de rotation (11), dans lequel le porte-échantillons (9) meut les récipients à échantillons (7) pendant le stockage à l'intérieur de la chambre de chauffage (3) sur au moins une trajectoire circulaire définie autour de l'axe de rotation (11), **caractérisé en ce qu'**au moins un capteur de température (21) est agencé au porte-échantillons (9) ou à un des récipients à échantillons (7), dans lequel ledit au moins un capteur de température (21) est raccordé à un dispositif de collecte de données (25) par le biais d'une ligne de données (23) guidée le long de l'arbre d'entraînement (15), dans lequel l'arbre d'entraînement (15) est réalisé comme arbre creux et dans lequel la ligne de données (23) est guidée dans l'arbre creux.

2. Dispositif selon la revendication 1, **caractérisé en ce que** le porte-échantillons (9) est réalisé pour maintenir des récipients à échantillons (7) allongés, dans lequel les récipients à échantillons (7) peuvent être maintenus parallèles à l'axe de rotation (11) au moyen du porte-échantillons (9).

3. Dispositif selon la revendication 1 ou 2, **caractérisé en ce que** le porte-échantillons (9) peut être entraîné par un dispositif d'entraînement (13) agencé au-dessus de la chambre de chauffage (3).

4. Dispositif selon la revendication 3, **caractérisé en ce que** le porte-échantillons (9) peut être entraîné par le biais d'un arbre d'entraînement (15) guidé à travers une ouverture (17) dans une paroi (5) de la chambre de chauffage (3).

5. Dispositif selon la revendication 3 ou 4, **caractérisé en ce que** l'arbre d'entraînement (15) est soutenu par le biais d'un dispositif de palier (19) agencé dans la paroi (5) ou sur le côté de la paroi (5) se détournant de la chambre de chauffage (3).

6. Dispositif selon l'une des revendications 1 à 5, **caractérisé en ce que** l'arbre creux forme une conduite de gaz afin d'introduire un gaz inerte dans la chambre de chauffage (3).

7. Dispositif selon l'une des revendications 1 à 6, **caractérisé en ce que** la chambre de chauffage (3) comporte un élément chauffant (27) avec dispositif de circulation d'air.

8. Dispositif selon l'une des revendications 1 à 7, **caractérisé en ce que** des surfaces de pales (29) sont agencées sur le porte-échantillons (9) pour la circulation de l'air.

9. Procédé de stockage thermique d'échantillons dans des récipients à échantillons (7) en utilisant un dispositif selon l'une des revendications 1 à 8, avec les étapes suivantes :
- introduction des échantillons dans les récipients à échantillons (7)
- agencement des récipients à échantillons dans la chambre de chauffage (3)
- chauffage de la chambre de chauffage (3) à une température de contrôle prédéfinie
- mouvement des récipients à échantillons (7) sur au moins une trajectoire circulaire définie autour de l'axe de rotation (11) pour une durée prédéfinie, dans lequel la chambre de chauffage (3) fonctionne avec la température de contrôle prédéfinie dans la durée, **caractérisé en ce que** pendant le mouvement des récipients à échantillons (7) la température est saisie sur au moins un des récipients à échantillons (7) ou sur le porte-échantillons (9) recevant les récipients à échantillons (7) .

10. Procédé selon la revendication 9, **caractérisé en ce que** l'axe de rotation (11) est horizontal ou vertical.

11. Procédé selon la revendication 9 ou 10, **caractérisé en ce que** la température est saisie et enregistrée à intervalles de temps réguliers pendant la durée.

12. Procédé selon l'une des revendications 9 à 11, **caractérisé en ce que** les récipients à échantillons (7) sont mus sur la trajectoire circulaire avec une vitesse de rotation entre 0,1 et 2000, de préférence entre 1 et 60, plus particulièrement entre 10 et 20 rotations par minute.

13. Procédé selon l'une des revendications 9 à 12, **caractérisée en ce que** les récipients à échantillons (7) sont agencés parallèlement à l'axe de rotation (11).
